# EUROPEAN PATENT SPECIFICATION

(11) **EP 2 589 424 B1**
(45) Date of publication and mention of the grant of the patent: **06.04.2016**
(21) Application number: 11800858.0
(22) Date of filing: 28.06.2011
(51) Int. Cl.: B01D 53/14, B01D 53/62, C01B 31/20

(54) **AQUEOUS SOLUTION CAPABLE OF ABSORBING AND COLLECTING CARBON DIOXIDE IN EXHAUST GAS WITH HIGH EFFICIENCY**
WÄSSRIGE LÖSUNG FÜR LEISTUNGSSTARKE ABSORPTION UND SAMMLUNG VON KOHLENSTOFFDIOXID IN ABGAS
SOLUTION AQUEUSE POUVANT ABSORBER ET COLLECTER LE DIOXYDE DE CARBONE DES GAZ D'ÉCHAPPEMENT AVEC UNE EFFICACITÉ ÉLEVÉE

(30) Priority: 30.06.2010 JP 2010150304
(43) Date of publication of application: 08.05.2013
(73) Proprietor: Research Institute Of Innovative Technology For The Earth, Kizugawa-shi, Kyoto 619-0292 (JP); Nippon Steel & Sumitomo Metal Corporation, Tokyo 100-8071 (JP)
(72) Inventor: OKABE, Hiromichi, Kizugawa-shi Kyoto 619-0292 (JP); CHOWDHURY, Firoz Alam, Kizugawa-shi Kyoto 619-0292 (JP); GOTO, Kazuya, Kizugawa-shi Kyoto 619-0292 (JP); ONODA, Masami, Tokyo 100-8071 (JP); MATSUZAKI, Yoichi, Tokyo 100-8071 (JP)
(74) Representative: Vossius & Partner Patentanwälte Rechtsanwälte mbB
(86) International application number: PCT/JP2011/064820
(87) International publication number: WO 2012/002394

(56) References cited:
- EP-A1- 0 945 162
- EP-A1- 2 189 207
- WO-A1-2004/048642
- JP-A- 2008 013 400
- JP-A- 2009 006 275
- US-A- 4 541 946
- US-A1- 2007 244 205

## Description

### Technical Field

The present invention relates to an aqueous solution for absorbing and recovering carbon dioxide (CO₂) contained in a gas. The present invention further relates to a method for absorbing and recovering carbon dioxide using the aqueous solution.

### Background Art

In recent years, frequent disasters and climate changes that are presumed to be caused by global warming have had a serious influence on agricultural production, living conditions, energy consumption, etc. This global warming is considered to be caused by an increase in atmospheric greenhouse gases, such as carbon dioxide, methane, nitrous oxide, and CFCs, in association with an increase in human activity. The main gas among the greenhouse gases is atmospheric carbon dioxide, and there is thus an urgent need for a measure to reduce carbon dioxide emissions.

Examples of sources of carbon dioxide include thermal power plants, factory boilers, and cement plant kilns using coal, heavy oil, natural gas, etc., as a fuel; blast furnaces of iron mills where iron oxide is reduced using coke; automobiles, ships, aircrafts, and like transportation equipment using gasoline, heavy oil, light oil, etc., as a fuel; and the like. Except for transportation equipment, the above-mentioned sources of carbon dioxide are fixed facilities, which are expected to be easily adapted to implement CO₂ emission reduction measures.

Several methods are already known for recovering carbon dioxide from exhaust gas, and a wide variety of methods are currently under research.

For example, a method comprising bringing a carbon dioxide-containing gas into contact with an aqueous alkanolamine solution in an absorption tower to absorb carbon dioxide into the solution is well known see e.g. EP2189207. Examples of known alkanolamines include monoethanolamine (hereinafter sometimes referred to as MEA), diethanolamine (DEA), triethanolamine (TEA), methyldiethanolamine (MDEA), diisopropanolamine (DIPA), diglycolamine (DGA), and the like. MEA is generally used.

However, the use of such an aqueous alkanolamine solution as an absorbing solution requires either the use of expensive corrosion-resistant steel as the equipment material or a reduction in the amine concentration in the absorbing solution, because such a solution is highly corrosive to the equipment material. Furthermore, it is difficult to separate the absorbed carbon dioxide, and the solution must therefore be heated to a temperature as high as 120°C to separate and recover carbon dioxide. This is because the heat of reaction between carbon dioxide and amine, e.g., MEA, is as high as 80 kJ/mol-CO₂, and a large amount of energy is therefore required to separate carbon dioxide. For example, to recover carbon dioxide in an electric power plant by this method, extra energy that corresponds to 20% of the generated electric power is required. In an age when the reduction of carbon dioxide emissions, energy saving, and resource saving are desired, this high energy consumption is a major impediment to the realization of a carbon dioxide absorption and recovery system, and a technique for recovering carbon dioxide with low energy consumption has been in demand.

For example, Patent Literature (PTL) 1 describes a method of removing carbon dioxide from combustion exhaust gas, the method comprising bringing combustion exhaust gas at atmospheric pressure into contact with an aqueous solution of a so-called "hindered amine" to absorb carbon dioxide into the aqueous solution. The "hindered amine" has a steric hindrance around the amino group, such as an alkyl group.

Patent Literature 1 discloses using 2-methylaminoethanol (hereinafter sometimes referred to as MAE) or 2-ethylaminoethanol (hereinafter sometimes referred to as EAE) as a hindered amine in the Examples. In the Examples of Patent Literature 1, an aqueous solution containing 30 wt% of MAE or EAE was used. Although not used in the Examples, other amines such as 2-isopropylaminoethanol (hereinafter sometimes referred to as "IPAE") are also mentioned as examples of hindered amines.

Patent Literature 2 discloses an absorbing solution consisting only of 2-isopropylaminoethanol (IPAE), which is also a hindered amine. Patent Literature 2 mentions excellent performance of absorption and separation as a feature of this absorbing solution. However, as shown in Comparative Examples 1 and 2, Patent Literature 2 discloses that when the concentration is increased to 60 wt% to achieve more efficient recovery of carbon dioxide, the CO₂ absorption rate and the amount of CO₂ separated are greatly reduced, resulting in deterioration in performance of the absorbing solution, and the properties of the hindered amine are not therefore fully utilized.

An amine component, which is an active ingredient of a carbon dioxide absorbing solution, is generally used at a molar concentration of 3 to 5 mol/L and at a weight concentration of 35 to 50%, as shown in many Examples. It is known that the use thereof in a high concentration deteriorates all of the properties. This is presumably because an increase in the amine concentration in an absorbing solution increases the viscosity of the absorbing solution, which causes, for example, a reduction in, in particular, the CO₂ absorption rate, as well as a reduction in the heat transfer performance.

On the other hand, an increase in the amine concentration in an absorbing solution increases the amount of carbon dioxide recovered per cycle of the absorption and release steps. If, therefore, the use of a high amine concentration becomes possible, it would be advantageous in achieving an effect, i.e., reducing the energy consumption required for CO₂ recovery per unit weight.

Patent Literature 3 discloses that when carbon dioxide is formed into micro-bubbles to be recovered and stored under the seabed or in the earth, the addition of a surfactant can prevent the micro-bubbles from bonding to each other, and the lifespan of the micro-bubbles can thereby be extended. However, the purpose of using a surfactant and the effect achieved thereby are different from the purpose employed and the effect achieved in relation to the aqueous alkanolamine solution of the present invention.

### Citation List

### Patent Literature

PTL 1: Japanese Patent No. 2871334
PTL 2: Japanese Unexamined Patent Publication No. 2009-6275
PTL 3: Japanese Unexamined Patent Publication No. 2004-50167

### Summary of Invention

### Technical Problem

In view of the above-described problems of the prior art, an object of the present invention is to provide an aqueous solution capable of recovering high-purity carbon dioxide with low energy consumption, the aqueous solution being capable of not only absorbing carbon dioxide from a gas with high efficiency, but also separating carbon dioxide from the aqueous solution with high efficiency. More specifically, an object of the present invention is to provide an aqueous solution containing hindered amine at a high concentration, as an absorbing solution with excellent properties compared to those of conventional amine solutions. Because the aqueous solution achieves a large amount of CO₂ absorbed and a large amount of CO₂ separated per unit amount, with low energy consumption for CO₂ separation, the aqueous solution can recover high-purity carbon dioxide by efficiently absorbing and separating carbon dioxide.

### Solution to Problem

In order to improve the efficiency at the time of CO₂ absorption, the present inventors conducted extensive research on an absorbing solution for recovering carbon dioxide. More specifically, the inventors performed a CO₂ absorption step using absorbing solutions containing various alkanolamines (hindered amine type) at a high concentration, followed by separation of CO₂ from each absorbing solution.

It was then found that when an absorbing solution containing a small amount of a surfactant and 50 to 70 wt% of N-alkyl alkanolamine, i.e., a hindered amine, is used to collect carbon dioxide from a carbon dioxide-containing exhaust gas, and when a separation step is performed subsequent to an absorption step, it is possible to achieve a large amount of CO₂ absorption and an increased CO₂ absorption rate, as well as a greatly improved amount of CO₂ recovered per cycle of absorption and separation per unit amount of absorbing solution. As a result, the inventors found that the energy required for separating and recovering carbon dioxide can be reduced. The present invention has thereby been accomplished.

In general, most hindered amines have a structure such that the amino group is substituted with a bulky alkyl group, and thus have low hydrophilicity. For this reason, it is considered that when they are used at a high concentration, the viscosity would increase, causing problems such as a reduction in the amount of CO₂ absorption and a reduction in the CO₂ absorption rate.

However, as a result of an extensive study on the association between various physical properties and absorption performance in terms of a high-concentration aqueous solution, it was found that the surface tension of the absorbing solution is associated with the performance of the absorbing solution. It was further found that when the absorbing solution contains a surfactant, the surface tension decreases due to the presence of the surfactant, thereby preventing a reduction in the absorption rate even when the absorbing solution has a high concentration. As a result of a study on the association between the addition of various surfactants and the absorption performance, it was found that in order to prevent a reduction in the absorption rate when the concentration is higher than that conventionally employed, the surface tension of the absorbing solution at an ordinary temperature (25°C) must be adjusted to 30 mN/m or less.

Due to the above, conventional problems have been solved, enabling the provision of an aqueous solution that achieves an increased amount of CO₂ absorption, that exhibits absorption performance in achieving a large loading amount (the difference between the amount of CO₂ absorbed and the amount of CO₂ separated per cycle), and that can recover high-purity carbon dioxide with lower energy consumption than that conventionally required to absorb and separate carbon dioxide.

More specifically, the present invention is an aqueous solution according to claim 1 and a method according to claim 7.

### Advantageous Effects of Invention

The high-concentration aqueous alkanolamine solution containing a surfactant of the present invention achieves an effect, i.e., achieves an increased amount of carbon dioxide recovered per cycle of absorption and separation. In addition, the use of the high-concentration absorbing solution achieves an effect, i.e., achieves a reduction in the heat of absorption per mole of carbon dioxide, compared to a case where a low-concentration absorbing solution is used; and the energy consumption required for carbon dioxide recovery per unit weight is thus reduced. Consequently, the aqueous solution of the present invention can efficiently absorb carbon dioxide from a gas and separate the absorbed carbon dioxide to recover high-purity carbon dioxide, with low energy consumption. Furthermore, an increase in efficiency in carbon dioxide absorption and separation causes a reduction in the amount of a circulation flow in a cycle of absorption and separation, making downsizing of absorption towers, separation towers, and equipment associated with such towers possible. As a result, an effect in terms of reducing the investment amount and operation cost can be produced.

Moreover, monoethanolamine used for absorbing carbon dioxide is generally highly corrosive to metal materials, such as carbon steel. It is considered that the corrosivity thereof increases, in particular, at a high concentration. However, the aqueous solutions of N-alkylamines used in the present invention have a low corrosivity, and an increase in the corrosivity is not observed even at a high concentration. This is advantageous because an expensive high-grade corrosion-resistant steel is not required in plant construction.

### Description of Embodiments

Hereinafter, the present invention is described in detail.

### Aqueous solution for absorbing and recovering carbon dioxide

The aqueous solution of the present invention used for absorbing and recovering carbon dioxide from a carbon dioxide-containing gas has a feature in that it comprises 50 to 70 wt% of a secondary amine compound represented by Formula (1): 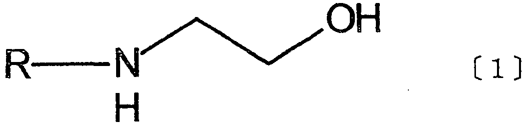 wherein R represents a straight- or branched-chain alkyl group having 3 to 5 carbon atoms; and a surfactant.

Specific examples of R include n-propyl, isopropyl, n-butyl, isobutyl, sec-butyl, n-pentyl, isopentyl, and the like. Of these, isopropyl, n-butyl, and isobutyl are preferable, with isopropyl and n-butyl being more preferable. Compound (1) may be used singly or in a combination in the aqueous solution of the present invention.

The aqueous solution of the present invention contains a secondary amine compound represented by Formula (1) at a concentration of generally 50 to 70 wt%, preferably 52 to 70 wt%, and more preferably 54 to 66 wt%. When the concentration is 71 wt% or greater, the surface tension reducing effect would be insufficient, and a satisfactory effect in terms of improving the absorption rate cannot be easily obtained.

In general, hindered amines are excellent amines having a low heat of absorption and high separation performance, unlike monoethanolamines. The reason for this is attributable to the difference in a reaction with carbon dioxide. According to ¹³C-NMR measurement, the reaction of monoethanol with carbon dioxide is accompanied mainly by the formation of carbamate linkages. It is known, however, that when a hindered amine of Formula (1), in which the number of the carbon atoms of R is not limited, is used, both carbamate linkages and bicarbonate linkages are formed. For example, when ethylaminoethanolamine, in which R is an ethyl group, is used, the formation of the carbamate linkages accounts for as high as about 30%. However, when Compound (1) of the present invention, in which R is a straight- or branched-chain alkyl group having 3 to 5 carbon atoms, is used, the linkage mode between carbon dioxide and the amine compound is such that a minimal number of carbamate linkages are formed; the reaction thereof with carbon dioxide mostly resulted in the formation of bicarbonate linkages that have a low heat of absorption. This contributes to the expression of excellent performance to solve the problem, i.e., to achieve a reduction in energy consumption for recovery.

As described above, the aqueous solution of the present invention also has a feature in that it has a low heat of absorption at the time of carbon dioxide absorption, compared to a low-concentration aqueous solution. For example, the heat of absorption per mole from the initial point of the absorption reaction to the point where carbon dioxide is absorbed to a molar ratio of 0.6 relative to amine is 76.6 kJ/mol-CO₂ when the IPAE concentration is 30 wt%, and is as low as 70.2 kJ/mol-CO₂ when the IPAE concentration is as high as 60 wt%. This is due to the following reasons: in the hindered amine structure of the present invention, the reaction between carbon dioxide and amine is mainly accompanied by the formation of bicarbonate linkages, as described above, and the heat of absorption is attributed to the formation of ion pairs between bicarbonate ions and protonated amines, as well as the solvation with water used as a solvent. As such, it is presumed that because the concentration of the aqueous solution is made higher, the stable structure of each ion in the aqueous solution and the solvation undergo a change, causing a reduction in the heat of absorption.)

The heat of absorption of carbon dioxide absorption corresponds to heat required for separation of carbon dioxide. Therefore, a reduction in the heat of absorption can achieve a reduction in energy consumption required for separating carbon dioxide, thereby producing an effect that contributes to a reduction in energy consumption required for carbon dioxide recovery.

The following describes the effects and types of a surfactant that is a constituent element of the present invention. As described above, when an aqueous amine solution has a high concentration, the amount of CO₂ recovered per cycle of absorption and release per unit weight of absorbing solution increases, producing an effect in terms of improving efficiency of CO₂ recovery and reducing the energy consumption required for CO₂ recovery; however, the absorption rate is reduced, and a predetermined carbon dioxide absorption amount therefore cannot be achieved. This is probably because the use of a high-concentration aqueous amine solution reduces the contact efficiency of carbon dioxide with the absorbing solution.

The present inventors conducted a detailed study on the relationship between various properties of the high-concentration absorbing solution and the CO₂ absorption rate. As a result, the inventors found that the surface tension, in particular, among the properties of the absorbing solution serves as a key controlling factor. In a carbon dioxide absorption reaction with the use of an aqueous amine solution, i.e., a gas liquid contact reaction, the efficiency at the contact interface between a gas and a liquid plays an important role, and it is presumed that in a high-concentration absorbing solution, a reduction in the surface tension is associated with an improvement in the contact efficiency.

In the hindered amine of the present invention, the amino group is substituted with an alkyl group. It is considered that when the alkyl group is with a longer carbon chain and a higher degree of branching, the hydrophilicity is further reduced, decreasing the solubility in water. For example, Patent Literature 2 discloses that when IPAE, in which the R group is isopropyl, is used in an absorbing solution at a concentration as high as 60 wt%, the absorption rate would be reduced.

When IPAE, which is one of the compounds of the present invention, is used in a predetermined absorption test, the absorption rate of the aqueous solution at a concentration of 30 wt% was 5.0 g/L/min, and the absorption rate of the aqueous solution at a concentration of 60 wt% was reduced to 2.9 g/L/min. To address such a reduction in the absorption rate of the high-concentration absorbing solution, 100 ppm weight concentration of a nonionic surfactant was added to each of the aforementioned absorbing solutions. Consequently, the absorption rate of the 30 wt% aqueous solution was 5.2 g/L/min, and the addition of the surfactant thus did not greatly affect its absorption rate. In contrast, the absorption rate of the 60 wt% absorbing solution increased to 4.7 g/L/min, and the addition of the surfactant thus effectively increased its absorption rate. The absorption rate used herein refers to the amount of carbon dioxide absorbed per minute at the point that 1/2 of the saturation absorption amount of carbon dioxide is absorbed while carbon dioxide is absorbed into an absorbing solution to saturation point at 40°C. If the absorption rate is 4.5 g/L/min or more, the rate is considered to be industrially employable.

The above-described effect of the surfactant on the high-concentration aqueous amine solution is presumably attained for the following reasons: when the above-mentioned surfactant is added to the 30 or 60 wt% aqueous solution containing IPAE, the surface tension of the 30 wt% aqueous solution at an ordinary temperature is 45 mN/m (the surface tension is 78 mN/m when IPAE is not contained), while the surface tension of the 60 wt% aqueous solution is greatly reduced to 24 mN/m. Such a reduction in the surface tension results in an improvement in the absorption rate. It is presumed that an improvement in the wettability, which facilitates contact efficiency between carbon dioxide and the absorbing solution on the surface of the absorbing solution in the gas-liquid reaction, causes an improvement in the absorption rate.

Surfactants are generally classified into anionic, cationic, ampholytic and nonionic surfactants, depending on the moiety of the compound structure that induces surface activity. In the present invention, usable nonionic surfactants include polyoxyethylene alkyl ether (hereinafter sometimes referred to as "PEG"). Surfactants having a fluorine atom in its compound may also be used in the present invention. Such surfactants are also classified into four types, depending on the properties of the moiety that induces surface activity. Any type of these surfactants may also be used. Examples of fluorochemical surfactant compounds include various commercially available surfactants containing perfluoroalkyl alcohol, perfluoroalkyl sulfonic acid, and the like, as a component.

The surfactant used in the present invention is determined according to, for example, the type and concentration of amine in the aqueous solution, as well as the temperature during use. The surfactants used are fluorine-containing compounds and polyoxyethylene alkyl ether-based compounds. As fluorine-containing compounds, a compound having a nonionic or ampholytic perfluoroalkyl group is used. Examples of compounds having a nonionic perfluoroalkyl group include Surflon S-141 (produced by AGC Seimi Chemical Co., Ltd.). Examples of compounds having an ampholytic perfluoroalkyl group include Surflon S-131 (produced by AGC Seimi Chemical Co., Ltd.).

The content of the surfactant in the aqueous solution of the present invention is optimally determined according to, for example, the types of amine and surfactant to be used. It is generally sufficient to use a surfactant in a small amount. The surfactant is used in an amount of preferably 10 to 1,500 ppm, more preferably 20 to 1,000 ppm, still more preferably 20 to 800 ppm, and particularly preferably 30 to 700 ppm, on a weight basis, based on the aqueous solution. The optimum amount of the surfactant can be determined by conducting a test in which various amounts of surfactant are added to the absorbing solutions containing different types of amines in different concentrations. The addition of surfactant in an excessive amount causes problems, such as foaming of the solution. The surfactant may be added as is, or may be in the form of a solvent that does not affect the absorption and separation, e.g., a solution, such as alcohol.

The secondary amine compounds represented by Formula (1) and the surfactants described above are commercially available or may be produced by a known method.

The surface tension of the aqueous solution of the present invention is preferably 30 mN/m or less, more preferably 28 mN/m or less, and even more preferably 20 to 27 mN/m, at 25° C. When the surface tension is in the above-mentioned range, the CO₂ absorption rate can be improved in the aqueous solution of the present invention containing an amine at a high concentration. The surface tension used in the present invention refers to a value measured by a hanging drop method (pendant drop method) using a Drop Master 300 (Kyowa Interface Science Co., Ltd.) at 25° C.

Examples of a carbon dioxide-containing gas include exhaust gas from the following facilities: thermal power plants, boilers of factories, or kilns of cement plants using heavy oil, natural gas, or the like as a fuel; blast furnaces of iron mills, where iron oxide is reduced with coke; converters of iron mills, where carbon in pig iron is combusted to manufacture steel; and the like. The gas contains carbon dioxide at a concentration of generally about 5 to 30 volume%, and particularly about 6 to 25 volume%. When the concentration of carbon dioxide is in the above-mentioned range, the working effect of the present invention is advantageously provided. The carbon dioxide-containing gas may also contain a gas such as water vapor, CO, H₂S, COS, SO₂, and hydrogen, in addition to carbon dioxide.

### Method for absorbing and recovering carbon dioxide

The method for absorbing and recovering carbon dioxide of the present invention has a feature in that it comprises the following steps:
(1) bringing a carbon dioxide-containing gas into contact with the above-described aqueous solution to absorb carbon dioxide from the gas; and
(2) heating the aqueous solution with the absorbed carbon dioxide obtained in (1) above to separate and recover carbon dioxide.

### Carbon dioxide absorption step

The method of the present invention comprises the step of bringing a carbon dioxide-containing gas into contact with the above-described aqueous solution to allow the solution to absorb carbon dioxide from the gas. The method for bringing a carbon dioxide-containing gas into contact with the aqueous solution containing N-alkyl aminoethanol, which is a hindered amine, represented by Formula (1) is not particularly limited. Examples of the method include a method comprising bubbling a carbon dioxide-containing gas into the aqueous solution to allow the solution to absorb carbon dioxide; a method comprising mist-spraying the aqueous solution over a gas stream containing carbon dioxide (misting or spraying method); a method comprising bringing a carbon dioxide-containing gas into countercurrent contact with the aqueous solution in an absorption tower containing a porcelain or metal mesh filler; and the like.

The carbon dioxide-containing gas is absorbed into the aqueous solution at a temperature of generally 60° C or less, preferably 50° C or less, and more preferably about 20 to 45° C. The lower the temperature, the larger the amount of CO₂ absorbed. How far the temperature should be reduced is determined according to the gas temperature of exhaust gas, heat recovery target, and other factors. The absorption of carbon dioxide is generally performed at approximately atmospheric pressure. To enhance the absorption performance, the pressure may be increased to higher levels. To reduce the energy consumption required for compression, the absorption is preferably performed at atmospheric pressure.

The carbon dioxide-containing gas is the same as those described above.

### Carbon dioxide separation step

The method of the present invention comprises the step of heating the aqueous solution obtained in the carbon dioxide absorption step to separate and recover carbon dioxide.

Examples of the method of separating carbon dioxide from the aqueous solution with the absorbed carbon dioxide to recover high-purity or high-concentration carbon dioxide include a separation method comprising heating and bubbling the aqueous solution using a pot as in distillation; a method comprising heating the aqueous solution in a plate tower, a spray tower, or a separation tower containing a porcelain or metal mesh filler to increase the liquid contact interface; and the like. Carbon dioxide is thereby freed and released from bicarbonate ion.

Carbon dioxide is separated at a solution temperature of generally 70° C or more, preferably 80° C or more, and more preferably about 90 to 120°C. The higher the temperature, the larger the amount of CO₂ absorbed. However, an increase in the temperature requires an increase in energy for heating the absorbing solution. Therefore, the temperature is determined according to the gas temperature during the process, heat recovery target, and other factors. The aqueous amine solution from which carbon dioxide has been separated is transferred back to the carbon dioxide absorption step for cyclic use (to be recycled). The heat applied in the carbon dioxide separation step is effectively used in the cyclic process to increase the temperature of an aqueous solution to be transferred to the carbon dioxide separation step, by means of heat exchange with this aqueous solution. In this manner, a reduction in energy consumption in the entire recovery process can be achieved.

The carbon dioxide thus recovered generally has a purity of 98 to 99 volume%, and has a very high purity of 99.0 to 99.9 volume% when the process is more suitably and stably conducted. The recovered carbon dioxide can be used as, for example, chemicals, starting materials for synthesis of polymeric substances, and as refrigerants for frozen food products. It is also possible to isolate and store the recovered carbon dioxide in underground facilities, etc., the technology for which is currently under development.

### Examples

The present invention is described below in detail with reference to Examples. The present invention is not limited to these Examples.

### Example 1

A glass gas-scrubbing bottle was immersed in a constant-temperature water bath whose liquid temperature was set to 40°C. This bottle was filled with 50 mL of an aqueous solution (absorbing solution) containing 55 wt% of IPAE (reagent, produced by Tokyo Chemical Industry Co., Ltd.) and, as a surfactant, 100 ppm weight concentration of Surflon S-141 (produced by AGC Seimi Chemical Co., Ltd.), which is a nonionic perfluoro compound. The absorbing solution before performing the absorption had a surface tension of 25 mN/m at 25°C, as a result of the measurement using a Drop Master 300 produced by Kyowa Interface Science Co., Ltd. A gas mixture of 20 volume% of carbon dioxide and 80 volume% of nitrogen was dispersed as bubbles into this solution at a rate of 0.7 L/min through a glass filter with a pore size of 100 µm and a diameter of 13 mm at atmospheric pressure to cause absorption for 60 minutes.

The CO₂ concentration in the gas was continuously measured at the inlet and outlet of the absorbing solution using an infrared carbon dioxide meter (Horiba Gas Analyzer VA-3000). The amount of CO₂ absorbed was determined from the difference between the CO₂ flow rate at the inlet and the CO₂ flow rate at the outlet. When necessary, the amount of inorganic carbon in the absorbing solution was measured using a total organic carbon analyzer for gas chromatography (Shimadzu TOC-VCSH), and compared with the value obtained using the infrared carbon dioxide meter. The saturation absorption amount is defined as the amount of CO₂ absorbed until the CO₂ concentration at the outlet of the absorbing solution became equal to that at the inlet. Because the absorption rate changes according to the amount of CO₂ absorbed, the absorption rate was measured based on the absorption rate at the point that 1/2 of the saturation absorption amount was absorbed, and used for comparison.

Subsequently, the solution temperature was increased to 70° C over several minutes in the same gas stream, and the amount of CO₂ separated was measured over 60 minutes under the same conditions. The CO₂ saturation absorption amount at 40° C was 145.5 g/L, and the CO₂ absorption rate at the point that 1/2 of the saturation absorption amount was absorbed was 4.8 g/L/min. The amount of CO₂ separated at 70° C was 78.5 g/L. The recovered carbon dioxide had a purity of 99.8%.

The heat of absorption was measured at 40° C in two absorbers of the same shape, each equipped with a stirrer, using a differential thermal calorimeter (DRC Evolution produced by Setaram, Inc.) by introducing a predetermined amount of CO₂ into only one of the reactors, and measuring the difference in the heat of absorption in the two reactors during this process.

### Examples 2 and 3

The CO₂ saturation absorption amounts, CO₂ absorption rates, heat of absorption of CO₂, and the amounts of CO₂ separated were measured as described in Example 1, except that an aqueous solution containing 60 or 70 wt% of IPAE and, as a surfactant, 100 or 150 ppm weight concentration of Surflon S-141 was used, respectively, in place of the aqueous solution containing 55 wt% of IPAE and 100 ppm of S-141. The surface tensions of these absorbing solutions containing a surfactant were 24 mN/m and 23 mN/m, respectively. The CO₂ saturation absorption amounts at 40°C were 158.5 g/L and 162.7 g/L, the absorption rates were 4.7 g/L/min and 4.4 g/L/min, and the amounts of CO₂ separated at 70°C were 87.5 g/L and 89.5 g/L, respectively.

### Examples 4 to 6

The CO₂ saturation absorption amounts, CO₂ absorption rates, heat of absorption of CO₂, and amounts of CO₂ separated were measured as described in Example 2, except that the type of the alkyl group in the alkylamino alcohol was changed from the isopropyl group to an n-butyl group (n-BAE), an isobutyl group (IBAE), or an n-pentyl group (n-PEAE). In Example 5, in which IBAE was used, 200 ppm weight concentration of Triton X, which is nonionic polyoxyethylene alkyl ether, was used as a surfactant. The surface tensions of these absorbing solutions were 22, 25, and 23 mN/m, respectively.

### Examples 7 and 8

The CO₂ saturation absorption amounts, CO₂ absorption rates, heat of absorption of CO₂, and amounts of CO₂ separated were measured as described in Example 2, except that 150 ppm weight concentration of Surflon S-131, which is ampholytic, was used in Example 7, and 250 ppm weight concentration of nonionic polyoxyethylene alkyl ether was used in Example 8, as a surfactant, in place of 100 ppm of S-141. The surface tensions of these solutions were 26 and 24 mN/m, respectively.

### Example 9

The CO₂ saturation absorption amount, CO₂ absorption rate, heat of absorption of CO₂, and amount of CO₂ separated were measured as described in Example 2, except that the amount of the surfactant was changed from 100 ppm weight concentration to 1,500 ppm. The surface tension of this solution was 22 mN/m.

### Example 10

The CO₂ saturation absorption amount, CO₂ absorption rate, heat of absorption of CO₂, and amount of CO₂ separated were measured as described in Example 2, except that the amount of the surfactant was changed from 100 ppm weight concentration to 20 ppm. The surface tension of this solution was 30 mN/m.

### Comparative Examples 1 to 3

The CO₂ saturation absorption amounts, CO₂ absorption rates, heat of absorption of CO₂, and amounts of CO₂ separated were measured as described in Example 1, except that an aqueous solution containing only 30, 55, or 60 wt% of IPAE was used, in place of the aqueous solution containing 55 wt% of IPAE and 100 ppm of S-141. The surface tensions of these solutions were 55, 48, and 40 mN/m, respectively.

### Comparative Examples 4 to 6

In Comparative Examples 4 to 6, the CO₂ saturation absorption amounts, CO₂ absorption rates, heat of absorption of CO₂, and amounts of CO₂ separated were measured as described in Examples 4 to 6, respectively, except that an aqueous solution containing no surfactant was used. The surface tensions of these aqueous solutions were 45, 49, and 43 mN/m, respectively.

### Comparative Example 7

The CO₂ saturation absorption amount, CO₂ absorption rate, heat of absorption of CO₂, and amount of CO₂ separated were measured as described in Example 1, except that an aqueous solution obtained by adding 3 wt% of piperazine to an aqueous solution containing 52 wt% of IPAE so that the total weight of amines was 55 wt% was used, in place of the aqueous solution containing 55 wt% of IPAE and 100 ppm of S-141. Piperazine is known as a reaction activator in carbon dioxide absorption using an aqueous alkanolamine solution, and has an effect in terms of improving the CO₂ saturation absorption amount and CO₂ absorption rate.

Tables 1 and 2 show the results obtained in Examples 1 to 10 and Comparative Examples 1 to 7. In the tables, "%" indicates "weight%."

**Table 1**

| | Composition of Absorbing Solution (Weight) | | | | CO₂ Absorption Performance at 40°C | | | Separation Performance at 70°C |
|---|---|---|---|---|---|---|---|---|
| | (1) | | (2) Surfactant ppm | | CO₂ Saturation Absorption Amount (g/L of the Solution) | CO₂ Absorption Rate (g/L/min) | Heat of Absorption (kJ/mol-CO₂) | Amount of CO₂ Separated (g/L) |
| Example 1 | IPAE | 55% | S-141 | 100 | 145.5 | 4.8 | 72.3 | 78.5 |
| Example 2 | IPAE | 60% | S-141 | 100 | 158.5 | 4.7 | 70.2 | 87.5 |
| Example 3 | IPAE | 70% | S-141 | 150 | 162.7 | 4.4 | 68.9 | 89.5 |
| Example 4 | n-BAE | 60% | S-141 | 100 | 145.4 | 4.7 | 73.8 | 75.5 |
| Example 5 | IBAE | 60% | PEG | 200 | 149.3 | 4.5 | 72.3 | 78.8 |
| Example 6 | n-PEAE | 60% | S-141 | 100 | 129.0 | 4.5 | 72.0 | 62.6 |
| Example 7 | IPAE | 60% | S-131 | 150 | 155.5 | 4.6 | 70.1 | 87.5 |
| Example 8 | IPAE | 60% | PEG | 250 | 153.5 | 4.7 | 71.2 | 87.5 |
| Example 9 | IPAE | 60% | S-141 | 1500 | 143.2 | 4.3 | 70.4 | 62.2 |
| Example 10 | IPAE | 60% | S-141 | 20 | 122.7 | 4.0 | 70.4 | 72.2 |

**Table 2**

| | Composition of Absorbing Solution (Weight) | | | CO₂ Absorption Performance at 40°C | | | Separation Performance at 70°C |
|---|---|---|---|---|---|---|---|
| | (1) | | (2) Surfactant ppm | CO₂ Saturation Absorption Amount (g/L of the Solution) | CO₂ Absorption Rate (g/L/min) | Heat of Absorption (kJ/mol-CO₂) | Amount of CO₂ Separated (g/L) |
| Comp. Ex. 1 | IPAE | 30% | Not Added | 98.6 | 5.0 | 76.6 | 34.7 |
| Comp. Ex. 2 | IPAE | 55% | Not Added | 100.0 | 3.2 | 72.8 | 32.4 |
| Comp. Ex. 3 | IPAE | 60% | Not Added | 100.6 | 2.9 | 71.5 | 29.2 |
| Comp. Ex. 4 | n-BAE | 60% | Not Added | 95.7 | 2.3 | 72.8 | 30.1 |
| Comp. Ex. 5 | IBAE | 60% | Not Added | 90.5 | 2.3 | 71.8 | 25.5 |
| Comp. Ex. 6 | n-PEAE | 60% | Not Added | 88.6 | 2.5 | 71.5 | 28.4 |
| Comp. Ex. 7 | IPAE + PZ | 55% | Not Added | 136.2 | 4.6 | 76.2 | 48.4 |

### Example 1

As shown in the results above, in Example 1, which used a high-concentration aqueous solution, the CO₂ saturation absorption amount and the amount of CO₂ separated per unit amount of absorbing solution were higher than the results of Comparative Example 1 where 30 wt% of IPAE was used. Due to the addition of a surfactant, the absorption rate was 4.8 g/L, which is higher than the 3.2 g/L of Comparative Example 2, which employed the same IPAE concentration. This confirms the effect achieved by the addition of a surfactant. Further, the heat of absorption per mole of carbon dioxide was lower than the result of Comparative Example 1, which confirms the effect achieved by employing a high concentration.

### Examples 2 and 3

According to the results above, in Example 3, which used 70 wt% of IPAE, the CO₂ absorption rate resulted in a slightly lowered value; however, the CO₂ saturation absorption amount and the amount of CO₂ separated were higher than the results of Example 2. Therefore, the effect achieved by employing a high concentration was confirmed, i.e., an improvement in the performance was observed.

In Examples 2 and 3, in which high-concentration absorbing solutions were used, the amounts of CO₂ separated were higher than that of Comparative Example 3, in which the same conditions of separation was employed, i.e., at 70° C. The carbon dioxide recovery per cycle of absorption and separation was also higher than that of Comparative Example 3. Therefore, the solutions of Examples 2 and 3 exert an effect that contributes to a reduction in energy consumption for recovery.

### Examples 4 to 6

When the carbon chain length of the alkyl group was adjusted to 4 or 5, the CO₂ saturation absorption amount per unit of absorbing solution was reduced due to the influence of the molecular weight; however, in terms of IPAE, n-BAE, IBAE, and n-PEAE, the molar ratios of the CO₂ absorption amounts relative to amine, whose molecular weight has been corrected, resulted in almost the same values of 0.62, 0.63, 0.62, and 0.64, respectively. It was therefore confirmed that an effect equivalent to that achieved when an isopropyl group was used can be obtained. Further, it was confirmed that higher performance was achieved in terms of the CO₂ absorption rate and the amount of CO₂ separated, compared to the results of corresponding Comparative Examples 4 to 6.

### Examples 7 and 8

Compared to the results of Example 2 (Surflon S-141), although the CO₂ saturation absorption amounts were slightly smaller, the CO₂ absorption rates and amounts of CO₂ separation were almost equal. Therefore, an effect equal to that achieved when S-141 was used, was observed in Examples 7 and 8. Further, the heat of absorption was also at the same level as that observed in Example 2; an increased value thereof was not particularly observed.

### Example 9

Although the CO₂ saturation absorption amount and CO₂ absorption rate were slightly lower than the results of Example 2, the performance was higher than the results of Comparative Example 3, in which no surfactant was used. Therefore, the effect was confirmed. However, with this amount of the addition of surfactant, foaming was observed as the CO₂ absorption proceeded. This indicates that a further increase in the amount of the addition of surfactant would be difficult in consideration of operability.

### Example 10

Although the CO₂ saturation absorption amount and CO₂ absorption rate were slightly lower than the results of Example 2, the performance was higher compared to the results of Comparative Example 3, in which no surfactant was used. Therefore, the effect was confirmed.

### Comparative Examples 1 to 3

The CO₂ absorption rate was high when the concentration was as low as 30 wt%. However, the CO₂ absorption rate was greatly reduced when the concentration was 60 wt%, which resulted in insufficient values of both the CO₂ saturation absorption amount and the amount of CO₂ separated. This indicates that improving the performance of the absorbing solution by simply employing a high concentration is difficult.

### Comparative Examples 4 to 6

The absorbing solutions of Comparative Examples 4 to 6 correspond to the absorbing solutions of Examples 4 to 6, respectively; however, they contain no surfactant. The results of the CO₂ saturation absorption amounts, the CO₂ absorption rates, and the amounts of CO₂ separated obtained in Comparative Examples 4 to 6 were inferior to those obtained in the corresponding Examples. This confirms the effect achieved by the addition of surfactant, even when a hindered amine, other than IPAE, was used.

### Comparative Example 7

According to the results above, the addition of the reaction activator improved the CO₂ saturation absorption amount and CO₂ absorption rate, compared to the results obtained in Comparative Example 2 where an aqueous solution containing only IPAE was used. Because the surface tension at 25° C was 45 mN/m, the effect achieved by the addition of the reaction activator is not considered to be obtained as a result of a reduction in the surface tension. On the other hand, the use of an absorbing solution containing a reaction activator such as piperazine resulted in a high heat of absorption, and therefore does not contribute to a reduction in energy consumption for recovering carbon dioxide. It is thereby confirmed that the above-described method employed in the Examples is advantageous in all of CO₂ saturation absorption amount, reaction rate, heat of absorption, and the amount of CO₂ separated.

## Claims

1. An aqueous solution for absorbing and recovering carbon dioxide from a carbon dioxide-containing gas, the aqueous solution comprising:
50 to 70 wt% of a secondary amine compound represented by Formula (1) : 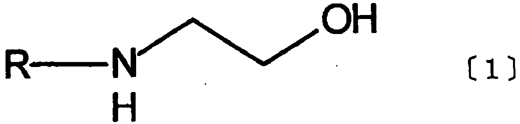 wherein R represents a straight- or branched-chain alkyl group having 3 to 5 carbon atoms; and
a surfactant
wherein the surfactant is at least one member selected from the group consisting of compounds having a nonionic perfluoroalkyl group, compounds having an ampholytic perfluoroalkyl group, and nonionic polyoxyethylene alkyl ether compounds.

2. The aqueous solution according to claim 1, wherein the surfactant is included at a concentration of 10 to 1,500 ppm by weight.

3. The aqueous solution according to claim 1, wherein R is an isopropyl group or an n-butyl group, and the surfactant is a compound having a nonionic perfluoroalkyl group.

4. The aqueous solution according to claim 1, wherein R is an isopropyl group or an n-butyl group, and the surfactant is a compound having an ampholytic perfluoroalkyl group.

5. The aqueous solution according to claim 1, wherein R is an isopropyl group or an n-butyl group, and the surfactant is a nonionic polyoxyethylene alkyl ether compound.

6. The aqueous solution according to claim 1, wherein the aqueous solution has a surface tension of 30 mN/m or less at 25°C.

7. A method for absorbing and recovering carbon dioxide, the method comprising:
(1) bringing a carbon dioxide-containing gas into contact with the aqueous solution of claim 1 to absorb carbon dioxide from the gas; and
(2) heating the aqueous solution with the absorbed carbon dioxide obtained in (1) above to separate and recover carbon dioxide.

## Patentansprüche

1. Eine wässrige Lösung zur Absorption und Gewinnung von Kohlendioxid aus einem Kohlendioxid-haltigen Gas, wobei die wässrige Lösung umfasst:
50 bis 70 Gew.-% einer sekundären Aminverbindung, dargestellt durch Formel (1): 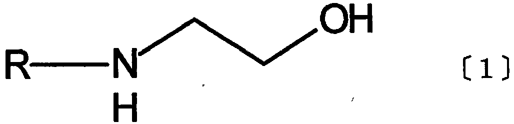 wobei R eine geradkettige oder verzweigte Alkylgruppe mit 3 bis 5 Kohlenstoffatomen bedeutet; und
ein grenzflächenaktives Mittel,
wobei das grenzflächenaktive Mittel mindestens ein Mitglied, ausgewählt aus der Gruppe bestehend aus Verbindungen mit einer nichtionischen Perfluoralkylgruppe, Verbindungen mit einer ampholytischen Perfluoralkylgruppe und nichtionischen Polyoxyethylenalkylether-Verbindungen, ist.

2. Die wässrige Lösung nach Anspruch 1, wobei das grenzflächenaktive Mittel in einer Konzentration vo 10 bis 1500 ppm, bezogen auf das Gewicht, enthalten ist.

3. Die wässrige Lösung nach Anspruch 1, wobei R eine Isopropylgruppe oder eine n-Butylgruppe ist und das grenzflächenaktive Mittel eine Verbindung mit einer nichtionischen Perfluoralkylgruppe ist.

4. Die wässrige Lösung nach Anspruch 1, wobei R eine Isopropylgruppe oder eine n-Butylgruppe ist und das grenzflächenaktive Mittel eine Verbindung mit einer ampholytischen Perfluoralkylgruppe ist.

5. Die wässrige Lösung nach Anspruch 1, wobei R eine Isopropylgruppe oder eine n-Butylgruppe ist und das grenzflächenaktive Mittel eine nichtionische Polyoxyethylenalkylether-Verbindung ist.

6. Die wässrige Lösung nach Anspruch 1, wobei die wässrige Lösung bei 25°C eine Oberflächenspannung von 30 mN/m oder weniger aufweist.

7. Ein Verfahren zur Absorption und Gewinnung von Kohlendioxid, wobei das Verfahren umfasst:
(1) In-Kontakt-bringen eines Kohlendioxid-haltigen Gases mit der wässrigen Lösung von Anspruch 1, um Kohlendioxid aus dem Gas zu absorbieren; und
(2) Erwärmen der wässrigen Lösung mit dem in (1) oben erhaltenen absorbierten Kohlendioxid, um Kohlendioxid abzutrennen und zu gewinnen.

## Revendications

1. Solution aqueuse pour absorber et récupérer le dioxyde de carbone d'un gaz contenant du dioxyde de carbone, la solution aqueuse comprenant :
50 à 70 % en poids d'un composé amine secondaire représenté par la formule (1) : 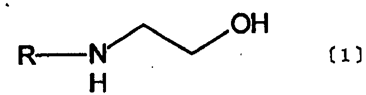 dans laquelle R représente un groupe alkyle à chaîne linéaire ou ramifiée ayant de 3 à 5 atomes de carbone ; et
un surfactant
dans laquelle le surfactant est au moins un élément sélectionné dans le groupe constitué de composés ayant un groupe perfluoroalkyle non ionique, de composés ayant un groupe perfluoroalkyle ampholytique, et de composés éther alkylique de polyoxyéthylène non ionique.

2. Solution aqueuse selon la revendication 1, dans laquelle le surfactant est compris en une concentration de 10 à 1 500 ppm en poids.

3. Solution aqueuse selon la revendication 1, dans laquelle R est un groupe isopropyle ou un groupe n-butyle, et le surfactant est un composé ayant un groupe perfluoroalkyle non ionique.

4. Solution aqueuse selon la revendication 1, dans laquelle R est un groupe isopropyle ou un groupe n-butyle, et le surfactant est un composé ayant un groupe perfluoroalkyle ampholytique.

5. Solution aqueuse selon la revendication 1, dans laquelle R est un groupe isopropyle ou un groupe n-butyle, et le surfactant est un composé éther alkylique de polyoxyéthylène non ionique.

6. Solution aqueuse selon la revendication 1, dans laquelle la solution aqueuse a une tension de surface de 30 mN/m ou moins à 25 °C.

7. Procédé d'absorption et de récupération de dioxyde de carbone, le procédé comprenant :
(1) la mise en contact d'un gaz contenant du dioxyde de carbone avec la solution aqueuse selon la revendication 1 pour absorber le dioxyde de carbone du gaz ; et
(2) le chauffage de la solution aqueuse avec le dioxyde de carbone absorbé obtenue dans l'étape (1) ci-dessus pour séparer et récupérer le dioxyde de carbone.
